Europäisches Patentamt

European Patent Office

Office européen des brevets

(19)

(11) Veröffentlichungsnummer: **0 031 125**
B1

(12) # EUROPÄISCHE PATENTSCHRIFT

(45) Veröffentlichungstag der Patentschrift:
22.02.84

(51) Int. Cl.³: **E 21 B 17/02**

(21) Anmeldenummer: 80107936.9

(22) Anmeldetag: 16.12.80

(54) **Lösbare Rohrverbindung.**

(30) Priorität: 20.12.79 DE 2951354

(43) Veröffentlichungstag der Anmeldung:
01.07.81 Patentblatt 81/26

(45) Bekanntmachung des Hinweises auf die Patenterteilung:
22.02.84 Patentblatt 84/8

(84) Benannte Vertragsstaaten:
AT BE CH FR GB IT LI NL SE

(56) Entgegenhaltungen:
DE - A - 2 450 880
DE - A - 2 832 517
GB - A - 1 157 155

(73) Patentinhaber: **Karl Bauer Spezialtiefbau GmbH & Co.
KG, Postfach 1260, D-8898 Schrobenhausen (DE)**

(72) Erfinder: **Henn, Günter, Ing. grad., Goethestrasse 17,
D-8898 Schrobenhausen (DE)**

(74) Vertreter: **Federhen, Ludwig, Dr., Kronprinzstrasse 14,
D-7000 Stuttgart 1 (DE)**

BUNDESDRUCKEREI BERLIN

Lösbare Rohrverbindung

Die Erfindung hat eine Verbindung einer Muffe an einem Rohrende mit einem Zapfen am anderen Rohrende zum Gegenstand, die leicht herstellbar und wieder lösbar ist. Die Erfindung eignet sich in besonderem Maße zum Verbinden und Lösen von Bohrrohren.

Die klassische, lösbare Verbindung von Bohrrohren ist die Gewinde-Rohrverbindung. Sie hat jedoch im Tiefbau erheblich Nachteile. Die Gewinde sind starker Abnützung ausgesetzt, da die Gewinderillen durch Bohrgut leicht verschmutzen. Dadurch sitzen die Gewinde häufig derartig fest, daß sich die Verbindung nicht oder nur mit großem Aufwand wieder lösen läßt. Andererseits kann sich die Gewinde-Verbindung beim Drehen des Bohrrohres in entgegengesetzter Richtung leicht lösen. Dies ist insbesondere nachteilig, wenn der Bohrkopf am erdseitigen Ende gegen die Drehrichtung gedreht werden muß, da bei mehrschüssigen Bohrrohren durch die Lösung einer Gewinde-Verbindung zwischen zwei Rohrschüssen die Drehung in Gegenrichtung nicht auf den Bohrkopf übertragen wird. Schließlich ist bei Gewinde-Verbindungen von Rohrschüssen von Nachteil, daß das Herstellen und Lösen insbesondere von Verbindungen mit langen Gewinden verhältnismäßig viel Zeit und technischen Aufwand in Anspruch nimmt.

Der Erfindung liegt die Aufgabe zugrunde, eine zuverlässige Verbindung zwischen Rohren, insbesondere Bohrrohrschüssen zu finden, die unter Ausnutzung der Vorteile einer Gewinde-Verbindung, nämlich dem großen Zugwiderstand, der sich aus der vielfältigen Schulterwirkung der Windungen ergibt, die Nachteile, insbesondere die Abnutzungsempfindlichkeit der Gewinde und die Gefahr des Festsetzens der Verbindung überwindet und schnell herstellbar und wieder lösbar ist.

Die Lösung der Aufgabe besteht aus einer Verbindung zwischen einer konischen Muffe mit einem konischen Zapfen, bei der mindestens eine ringförmige Ausnehmung, die über eine Bohrung mit einer Öffnung an der Außenfläche von Muffe oder Zapfen außerhalb des Bereiches der vorgesehenen Verbindung verbunden und die mit einem Ventil verschlossen ist, mit einer harten, unter hohem hydraulischen Druck dehnungsfähigen Abdeckung versehen ist, deren Oberfläche größer als die sich aus Länge × Höhe ergebende Fläche ist, so daß die Abdeckung durch den hydraulischen Druck gegen die gegenüberliegende Fläche an der Muffe oder dem Zapfen preßbar ist.

Zur Vergrößerung der Haftung zwischen Muffe und Zapfen ist vorzugsweise auch die der Abdeckung der Ausnehmung entsprechende gegenüber liegende Fläche von Muffe oder Zapfen mit einer Oberfläche versehen, die größer als die sich aus Länge × Höhe ergebende Fläche ist.

Vorzugsweise sind die ringförmigen gegenüber liegenden Flächen mit rechtwinklig zur Längsachse von Muffe oder Zapfen verlaufenden Rippen und Rillen versehen.

Zur Abdeckung der ringförmigen Ausnehmung an der Innenfläche der Muffe oder der Außenfläche des Zapfens wird vorzugsweise ein Stahlband verwendet, das mit längs verlaufenden, endlosen, gehärteten Rippen versehen ist.

Zur Erläuterung der Erfindung wird auf ein in der beigefügten Zeichnung dargestelltes Ausführungsbeispiel verwiesen.

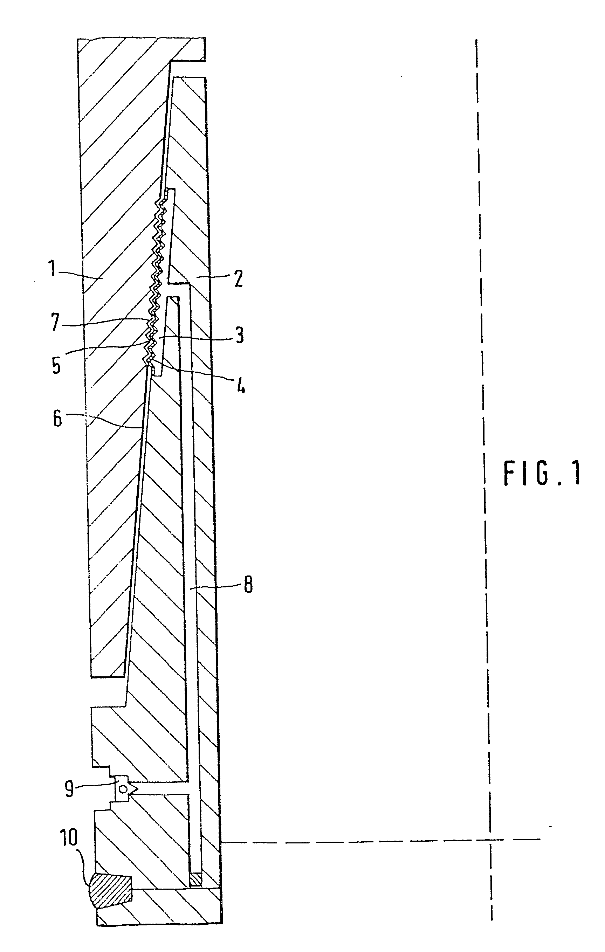

Fig. 1 zeigt einen Längsschnitt durch die Wandung eines aus zwei miteinander erfindungsgemäß verbundenen Rohrschüssen bestehenden Bohrrohres.

Die Verbindung besteht aus einer innen konisch verlaufenden Muffe 1 eines Rohrschusses und einem außen konisch verlaufenden Zapfen 2 eines weiteren Rohrschusses.

Der Zapfen 2 ist an der Außenfläche seines konischen Bereiches mit einer ringförmigen Ausnehmung 3 versehen, die mit einer aufgeschweißten Abdeckung 4 verschlossen ist. Die Abdeckung 4 besteht aus einem mit parallel verlaufenden Rippen 5 versehenen, gehärteten Stahlband. Die der Abdeckung 4 entsprechende gegenüber liegende Innenfläche 6 der Muffe 1 ist mit ebenfalls parallel verlaufenden Rippen 7 versehen, die den Rippen 5 entsprechen.

Die Ausnehmung 3 ist über eine mit einem hydraulischen Medium, beispielsweise Fett oder Öl/Wasser gefüllte Bohrung 8 mit der Außenwandung des Zapfens 2 verbunden, in der ein Ventil 9 angeordnet ist. Der Zapfen 2 sitzt mit einer Schweißnaht 10 verbunden auf dem Ende des Rohrschusses.

Zur Verbindung der Rohrschüsse wird auf den unteren Rohrschuß, der mit dem Zapfen 2 versehen ist, der obere Rohrschuß mit seiner Muffe 1 aufgesetzt. Sodann wird auf das Ventil 9 eine Fettspritze aufgesetzt, aus der mit hohem Druck Fett in die Bohrung gepreßt wird. Unter dem Druck des Mediums dehnt sich die Abdeckung 4 so aus, daß die Rippen 5 in die Rillen 7 der Innenfläche 6 der Muffe 1 gepreßt werden.

Zum Lösen der Verbindung wird über das Ventil 9 die Bohrung 8 druckentlastet und der untere Rohrschuß mit dem Zapfen 2 aus der Muffe 1 herausgezogen.

Es hat sich gezeigt, daß bei Verwendung von Stahlrohren mit einem Außendurchmesser von 220 mm und einer Wandungsdicke von 25 mm sowie von 2 mm dickem Stahlband von 50 mm Breite bei nicht gerillter Gegenfläche der Muffe Auszugskräfte von 40 Tonnen auf die Verbindung aufgebracht werden konnten.

**Patentansprüche**

1. Lösbare Rohrverbindung, insbesondere für Bohrrohrschüsse, bestehend aus einem Rohrende mit einer innen konisch ausgebildeten Muffe und einem Rohrende mit einem außen konisch ausgebildeten Zapfen, dadurch gekennzeichnet, daß die Innenfläche der Muffe (1) oder die Außenfläche des Zapfens (2) mit mindestens einer ringförmigen Ausnehmung (3) versehen ist, die über eine Bohrung (8) mit einer Öffnung an der Außenfläche der Muffe (1) oder des Zapfens (2) außerhalb des Bereiches der Verbindung verbunden und die mit einem Ventil (9) verschlossen ist, und die Ausnehmung (3) mit einer harten, unter hohem hydraulischen Druck dehnungsfähigen Abdeckung (4) versehen ist, deren Oberfläche größer als die sich aus Länge × Höhe ergebende Fläche ist, so daß die Abdeckung (4) durch den hydraulischen Druck gegen die gegenüber liegende Fläche an der Muffe (1) oder dem Zapfen (2) preßbar ist.

2. Lösbare Rohrverbindung gemäß Anspruch 1, dadurch gekennzeichnet, daß die der Abdeckung (4) der Ausnehmung (3) entsprechende gegenüber liegende Fläche von Muffe (1) oder Zapfen (2) mit einer Oberfläche versehen ist, die größer als die sich aus Länge × Höhe ergebende Fläche ist.

3. Lösbare Rohrverbindung gemäß vorangehenden Ansprüchen, dadurch gekennzeichnet, daß die ringförmigen, sich entsprechenden gegenüber liegenden Flächen von Muffe (1) und Zapfen (2) mit rechtwinklig zur Längsachse verlaufenden Rippen (5) und Rillen (7) versehen sind.

4. Lösbare Rohrverbindung gemäß Anspruch 3, dadurch gekennzeichnet, daß als Abdeckung (4) der Ausnehmung (3) ein Stahlband verwendet wird, das mit endlos verlaufenden, gehärteten Rippen (5) versehen ist.

## Claims

1. Releasable pipe connection, particularly for bore hole casing sections, consisting of a pipe end with an inwardly conical socket and a pipe end with an outwardly conical spigot, wherein the inside surface of the socket (1) or the outside surface of the spigot (2) is provided with at least one annular recess (3) which is connected via a bore (8) to an opening on the outside surface of the socket (1) or of the spigot (2) outside the region of the connection, said recess (3) being closed by a valve (9) and being provided with a hard cover (4), said cover being expandable under high hydraulic pressure whereby the surface of said cover (4) is greater than the area resulting from length × height, with the result that the cover (4) can, through the hydraulic pressure, be pressed against the opposite surface on the socket (1) or on the spigot (2).

2. Releasable pipe connection as defined in Claim 1, wherein the opposite surface of socket (1) or spigot (2) corresponding to the cover (4) of the recess (3) is provided with a surface which is greater than the area resulting from length × height.

3. Releasable pipe connection as defined in the preceding claims, wherein the annular, mating opposite surfaces of socket (1) and spigot (2) are provided with ribs (5) and grooves (7) extending at right angles to the longitudinal axis.

4. Releasable pipe connection as defined in Claim 3, wherein a steel band is used as the cover (4) of the recess (3), said steel bang being provided with endless, hardened ribs (5).

## Revendications

1. Raccord de tube amovible, en particulier pour des éléments de tubage, constitué d'une extrémité de tube munie d'un manchon dont l'intérieur est de forme conique et d'une extrémité de tube munie d'un cône caractérisé en ce que la surface interne du manchon (1) ou la surface externe du cône (2) est munie d'au moins un évidement annulaire (3) qui communique par l'intermédiaire d'un alésage (8) avec une ouverture à la surface externe du manchon (1) ou du cône (2) hors de la zone du raccord et est obturé par une vanne (9), et en ce que l'évidement (3) est muni d'une chape (4) expansible sous l'effet d'une pression hydraulique élevée, dont la superficie est supérieure à celle résultant de longueur × hauteur de sorte que la chape (4) puisse être pressée sous l'effet de la pression hydraulique contre la surface opposée du manchon (1) ou du cône (2).

2. Raccord de tube amovible suivant la revendication 1, caractérisé en ce que la surface correspondant à la chape (4) de l'évidement (3) et située à l'opposé sur le manchon (1) ou le cône (2) présente une superficie supérieure à celle résultant de longueur × hauteur.

3. Raccord de tube amovible suivant l'une quelconque des revendications précédentes caractérisé en ce que les surfaces annulaires, correspondantes et opposées du manchon (1) et du cône (2) sont munies de nervures (5) et de rainures (7) perpendiculaires à l'axe longitudinale.

4. Raccord de tube amovible suivant la revendication 3 caractérisé en ce que la chape (4) de l'évidement (3) est constituée par un feuillard d'acier muni de nervures (5) sans fin trempées.

FIG.1